**Europäisches Patentamt**

**European Patent Office**

**Office européen des brevets**

(11) Veröffentlichungsnummer : **0 089 381**
**B1**

(12) **EUROPÄISCHE PATENTSCHRIFT**

(45) Veröffentlichungstag der Patentschrift :
07.08.85

(21) Anmeldenummer : 82102203.5

(22) Anmeldetag : 18.03.82

(51) Int. Cl.⁴ : **B 64 C 27/32, B 64 C 27/72**

(54) **Rotor insbesondere für ein Drehflügelflugzeug.**

(43) Veröffentlichungstag der Anmeldung :
28.09.83 Patentblatt 83/39

(45) Bekanntmachung des Hinweises auf die Patenterteilung : 07.08.85 Patentblatt 85/32

(84) Benannte Vertragsstaaten :
**DE FR GB IT**

(56) Entgegenhaltungen :
**US-A- 2 372 416**
**US-A- 2 919 753**
**US-A- 3 126 967**
**US-A- 3 310 119**

(73) Patentinhaber : **Messerschmitt-Bölkow-Blohm Gesellschaft mit beschränkter Haftung**
**Robert-Koch-Strasse**
**D-8012 Ottobrunn (DE)**

(72) Erfinder : **Schwarz, Alois, Dipl.-Ing.**
**Ahornweg 21**
**D-8011 Putzbrunn (DE)**
Erfinder : **Mautz, Karlheinz**
**Brennerstrasse 13**
**D-8012 Ottobrunn (DE)**

Jouve, 18, rue St-Denis, 75001 Paris, France

**Beschreibung**

Die Erfindung betrifft einen Rotor gemäß dem Oberbegriff des Patentanspruchs 1.

Bei einem derartigen beispielsweise durch die DE-C-15 31 355 oder DE-C-21 50 741 bekannten Rotor kann bekanntlich auf gesonderte mechanische Blattschlag- und Blattschwenkgelenke verzichtet werden, wodurch die Verschleißanfälligkeit beträchtlich gemindert ist. Hinsichtlich des geringeren Schadensrisikos besteht außerdem die Möglichkeit einer Ausgestaltung der Rotornabe als ein Schutzgehäuse u. a. für die Blatteinstellwinkelsteuerung, wobei entsprechend der durch die DE-C-26 58 828 bekannten Steuergetriebeanordnung die von einer Taumelscheibe betätigten, umlaufenden Steuerstangen jeweils beispielsweise über einen Blattsteuerhebel am nabenseitigen Ende der zugeordneten Blattwurzelhülse angreifen können. Bei solcher kinematisch einfachen Blatteinstellwinkelsteuerung bestehen allerdings außerhalb der Rotornabe keine Eingriffsmöglichkeiten für das sogenannte Trackking, d. h. die Spurlaufausrichtung der Rotorblätter nach der Montage an der Rotornabe : Bekanntlich müssen sämtliche Rotorblätter so feineingestellt werden, daß sie im Betrieb bei gleichem kollektiven Blatteinstellwinkel (ohne zyklische Blattverstellung) in ein und derselben Ebene umlaufen (Spurlauf). Eine derartige Blattfeineinstellung um genau gleiche Winkelgrade oder gar -minuten der einzelnen Rotorblätter wird erfahrungsgemäß bei einem Rotor des öfteren nötig, u. a. meist auch nach Lagerwechseln im Blattsteuergetriebe. Deshalb besteht die Forderung nach einer einfachen, jederzeit leicht zugänglichen Einrichtung für die Blattspurlaufausrichtung, was beispielsweise durch Längenverstellbarkeit der Steuerstangen, sofern diese in der Rotornabe untergebracht sind, nicht ohne weiteres sichergestellt ist.

Der Erfindung liegt daher die Aufgabe zugrunde, bei einem Rotor der eingangs genannten Art, mit in der Rotornabe untergebrachtem Blattsteuergetriebe, eine besonders leicht zu handhabende Feineinstellungsmöglichkeit für die Spurlaufausrichtung des einzelnen Rotorblattes zu schaffen.

Diese Aufgabe ist gemäß dem Kennzeichen des Patentanspruchs 1 gelöst in der Erkenntnis, daß die üblicherweise in der Blattwurzelhülse festsitzende Buchse drehwinkelbeweglich unter entsprechender Verlängerung als ein Steuerelement zwischen der in der Rotornabe dem betreffenden Rotorblatt zuzuordnenden Steuerstange einerseits und der Blattwurzelhülse andererseits nutzbar ist und daß die zur Übertragung der Steuerbewegungen auf die Blattwurzelhülse herangezogene, an deren blattwurzelseitiger Öffnung (nach wie vor) leicht zugängliche Buchse die Möglichkeit eröffnet zu der vorgeschlagenen Zwischenschaltung eines zusätzlichen Blattsteuerelementes « Hebel » zwischen der Buchse und der Blattwurzel an diesem im Grunde einzig geeigneten Ort des Rotors für die angestrebte Blattfeineinstellung. Die Blattfeineinstellung ist dann bereits durch Feststellungsmittel für den Hebel in einfacher Weise realisierbar. Das verdeutlichen die in den Unteransprüchen gekennzeichneten, u. a. wegen geringer Störanfälligkeit bevorzugten Ausgestaltungen der Erfindung.

Die Erfindung wird nachfolgend anhand eines Ausführungsbeispiels weiter erläutert. Hierzu zeigt die Zeichnung von einem Rotor eines Drehflügelflugzeugs in

Figur 1 in der Draufsicht, teils geschnitten, einen Ausschnitt der Rotornabe mit einem Abschnitt eines Rotorblattes und den zugehörigen Steuerelementen für die Blatteinstellwinkelverstellung,

Figur 2 einen Schnitt gemäß Schnittlinie II-II der Fig. 1.

Die dargestellte Rotornabe 1 ist (wie diejenige des durch die DE-C-26 58 828 bekannten Rotors) als ein Gehäuse für Blattsteuerelemente gestaltet und (wie bei dem durch die DE-C-21 50 741 bekannten Rotor) für den Anschluß des einzelnen Rotorblattes bzw. dessen Blattwurzel 2 mit je einem radial auswärts gerichteten Rotornabenarm 1.1 versehen. Dieser ist in Form einer Blattwinkellagerhülse ausgebildet, in der über Wälzlager 3, 4 eine Blattwurzelhülse 5 drehbar angeordnet ist. Die Blattwurzelhülse 5 ist über Endlaschen 5.1 mittels Bolzen 6 mit der zugeordneten Blattwurzel 2 als deren Beschlag verbunden. Über die Blattwurzelhülse 5 und Wälzlager 3, 4 werden die Momente aus der Blattschlag- und Blattschwenkbiegung auf den Rotornabenarm 1.1 bzw. die die Rotornabe 1 abgesetzt.

Zur Aufnahme der Blattfliehkräfte ist die Blattwurzelhülse 5 in Blattfliehkraftwirkungsrichtung durch eine Buchse 7 arretiert, welche über einen Bolzen 8 mittels eines für die Blatteinstellwinkelbewegungen torsionsweichen Zugelementes 9, vorzugsweise in Form eines endlosen Lamellenbandes, an einem Bund 5.2 der Blattwurzelhülse 5 in Anlage gehalten wird. Das Zugelement 9 steht dabei andererseits mit einem Zentralkörper 10 in Verbindung, welcher, mit einer der Anzahl der Zugelemente bzw. Rotorblätter entsprechenden Anzahl von Anschlußbolzen 11 versehen, koaxial zur Rotordrehachse in der Rotornabe 1 angeordnet ist.

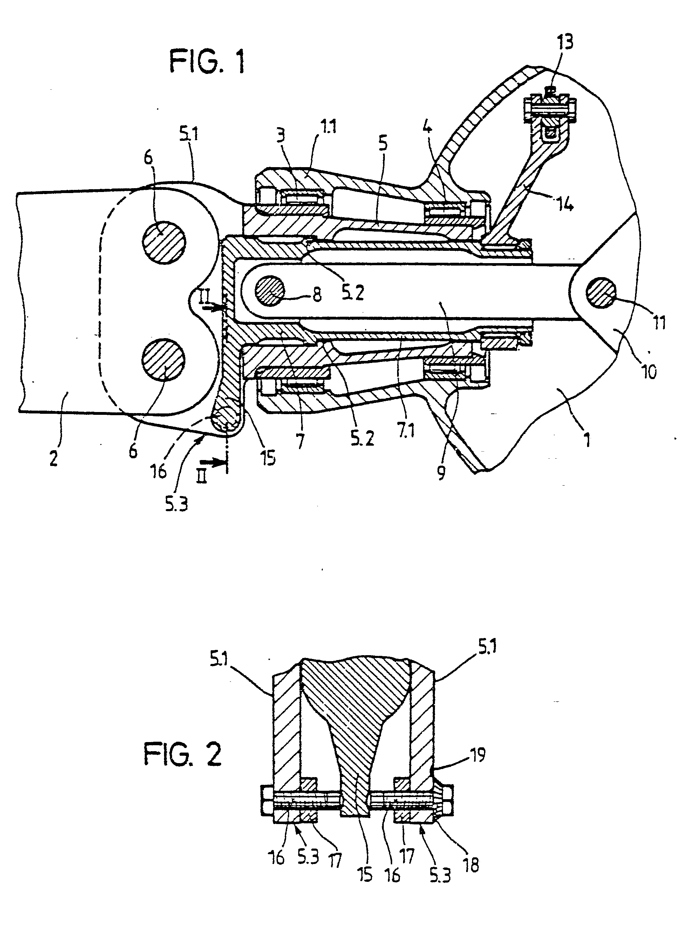

Um bei solchem Blattanschluß den Blatteinstellwinkel im Wege einer Drehwinkelbewegung der Blattwurzelhülse 5 mittels eines von einer üblichen Steuerstange 13 betätigten Blattsteuerhebels 14 verstellen zu können zusätzlich mit der Möglichkeit der Spurlaufausrichtung (sog. Tracking) des Rotorblattes von einer leicht zugänglichen Stelle außerhalb der Rotornabe 1, ist zum einen die vorgenannte Buchse 7 durch einen rohrförmigen Fortsatz 7.1 zu einer in die Rotornabe 1 reichenden Steuerwelle verlängert, die gegenüber der Blattwurzelhülse 5 drehwinkelbeweglich ist. An diesem Fortsatz 7.1 ist der Blattsteuerhebel 14 beispielsweise mittels einer Kerbverzahnung angeschlossen. Zum anderen ist diese Steuerwelle « Buchse 7 mit Fortsatz 7.1 » mit einem radial aus der Blattwurzelhülse 5 herausragenden Hebel 15 drehfest gekoppelt, welcher, beispielsweise als Ansatz der Buchse 7, an der Blattwurzelhülse 5 normalerweise festgestellt ist. Folglich führt im Rotorbetrieb eine Steuerbewegung der Steuerstange 13 über den Blattsteuerhebel 14 bzw. zu einer Drehwinkelbewegung des Fortsatzes 7.1 bzw. der Buchse 7 mit zwangsläufiger Verschwenkung des blattwurzelhülsenseitig festgestellten Hebels 15, welcher dann eine Drehwinkelbewegung der Blattwurzelhülse 5 und damit der Blattwurzel 2, also des Rotorblattes bewirkt. Für die Spurlaufausrichtung (sog. Tracking) ist die Blattwurzelhülse 5 gegenüber dem Hebel 15 verstellbar, was durch eine ent-sprechende Ausgestaltung der Hebel-Fest-stellungsmittel erreicht ist. Wie Fig. 2 zeigt, ist das freie Ende des Hebels 15 zwischen zwei einander gegenüberstehenden Stellschrauben 16 festgeklemmt, die in an der Blattwurzelhülse 5 bzw. an deren Endlaschen 5.1 (vgl. Fig. 1) angeformten Ansätzen 5.3 eingeschraubt und darin durch Kontermuttern 17 festgestellt sind. Einer der Schraubenköpfe ist mit einer Winkelskala 18, beispielsweise mit Minutenteilung, für eine Meßmarke 19 seitens des betreffenden Ansatzes 5.3 der Endlasche 5.1 bzw. Blattwurzelhülse 5 versehen, so daß nach dem Lösen der (im Rotorbetrieb angezogenen) Kontermuttern 17 durch entsprechendes Verdrehen der beiden dann gegen den feststehenden Hebel 15 sich abstützenden Stellschrauben 16 unmittelbar eine Drehwinkelbewegung der Blattwurzelhülse 5 im jeweils gewünschten Winkelmaß erreicht wird. Die Handhabung dieser Feineinstellung des Blattwinkels ist somit denkbar einfach. Es versteht sich, daß hierbei das Feststehen des Hebels 15 über die Buchse 7 und deren Fortsatz 7.1 durch den Blattsteuerhebel 14 bzw. die an einer nicht dargestellten Taumelscheibe sich abstützende Steuerstange 13 sichergestellt ist.

## Patentansprüche

1. Rotor, insbesondere für ein Drehflügelflugzeug, mit einem Anschluß des einzelnen Rotorblattes an der Rotornabe (1) über ein für die Blatteinstellwinkelbewegungen torsionsweiches Zugelement (9) unter drehwinkelbeweglicher Abstützung des Rotorblattes über eine an der Blattwurzel (2) angreifende, mit einer Steuerstange (13) gekoppelte Hülse in einem an der Rotornabe (1) in Form einer Blattwinkellagerhülse radial auswärts gerichteten Rotornabenarm, (1.1) wobei das in der Blattwurzelhülse (5) sich erstreckende Zugelement (9) diese mit seinem blattwurzelseitigen Ende über eine zwischengeschaltete Buchse (7) in Blattfliehkraftwirkungsrichtung sperrt, dadurch gekennzeichnet, daß die Buchse (7) durch einen in der Rotornabe (1) mit der Steuerstange (13) gekoppelten Fortsatz (7.1) zu einer gegen-über der Blattwurzelhülse (5) drehwinkelbeweg-lichen Steuerwelle verlängert ist, welche andererseits mit einem radial aus der Blattwurzelhülse (5) herausragenden, hieran in Drehrichtung justierbar festgestellten Hebel (15) drehfest verbunden ist.

2. Rotor nach Anspruch 1, dadurch gekennzeichnet, daß das freie Ende des Hebels (15) zwischen zwei einander gegenüberstehenden Stellschrauben (16) festgeklemmt ist, die in die Blattwurzelhülse (5) eingeschraubt sind.

3. Rotor nach Anspruch 2, dadurch gekennzeichnet, daß die einzelne Stellschraube (16) in der Blattwurzelhülse (5) feststellbar ist.

4. Rotor nach Anspruch 2, dadurch gekennzeichnet, daß wenigstens einer der Schraubenköpfe eine Winkelskala (18) für eine Meßmarke (19) an der Blattwurzelhülse (5) aufweist. --

## Claims

1. A rotor, more especially for a rotary-wing aircraft, with a connection of the individual rotor blade to rotor hub (1) by way of a tension element (9), which is torsion-soft for the blade pitch angle movements, along with rotary-angle-movable support of the rotor blade by way of a sleeve, acting on blade root (2) and coupled with a control rod (13), in a rotor hub arm (1.1) which is directed radially outwardly in the form of a blade angle bearing sleeve on the rotor hub (1), in which respect the tension element (9) extending in the blade root sleeve (5) blocks this, in the effective direction of the centrifugal force of the blade, with its bladeroot-side end by way of an interpolated bush (7), characterised in that the bush (7) is lengthened by an extension (7.1), coupled in the rotor hub (1) with control rod (13), to form a control shaft which is rotary-angle-movable relative to the blade root sleeve (5) and which is, on the other hand, connected in a torsionally-fast manner to a lever (15) which juts out radially from the blade root sleeve (5) and which is secured thereto so as to be adjustable in the direction of rotation.

2. A rotor according to claim 1, characterised in that the free end of the lever (15) is firmly clamped between two mutually opposite adjusting screws (16) which are screwed into the blade root sleeve (5).

3. A rotor according to claim 2, characterised in that the individual adjusting screws (16) are securable in the blade root sleeve (5).

4. A rotor according to claim 2, characterised in that at least one of the screw heads has an angle scale (18) for a measuring mark (19) on the blade root sleeve (5).

## Revendications

1. Rotor, en particulier pour un appareil à voilure tournante, comprenant un raccordement de la pale au moyeu (1) du rotor au moyen d'un élément de traction (9) sensible à la torsion pour les déplacements angulaires de variation du pas des pales, avec support déplaçable angulairement en rotation de la pale par l'intermédiaire d'un manchon agissant sur le pied (2) de la pale (4), accouplé à une tige de commande (13) et installé dans un bras (1.1) du moyeu du rotor, bras qui, sur le moyeu (1) du rotor, est dirigé radialement vers l'extérieur sous la forme d'un manchon portant le palier du mécanisme de commande des pales, l'élément de traction (9) s'étendant dans le manchon (5) du pied de pale et le bloquant dans le sens de l'action des forces centrifuges par son extrémité côté pied de pale par l'intermédiaire d'une douille (7) intercalée, caractérisé par le fait que la douille (7) est prolongée par un appendice (7.1) accouplé à la tige de commande (13) dans le moyeu (1) pour former un arbre de commande qui est déplaçable angulairement en rotation vis-à-vis du manchon (5) du pied de pale et qui est, par ailleurs, raccordé fixé en rotation à un levier (15) faisant saillie radialement en dehors du manchon (5) du pied de pale et fixé à celui-ci de façon ajustable dans le sens de la rotation.

2. Rotor selon la revendication 1, caractérisé par le fait que l'extrémité libre du levier (15) est insérée entre deux vis de réglage (16) mutuellement opposées qui sont vissées dans le manchon (5) du pied de pale.

3. Rotor selon la revendication 2, caractérisé par le fait que la vis de réglage individuelle (16) est bloquée dans le manchon (5) du pied de pale.

4. Rotor selon la revendication 2, caractérisé par le fait qu'au moins l'une des têtes de vis comporte une échelle d'angle (18) pour une marque de repère (19) prévue sur le manchon (5) du pied de pale.

## FIG. 1

## FIG. 2